# FASCICULE DE BREVET EUROPEEN

(11) **EP 0 375 475 B1**
(45) Date de publication et mention de la délivrance du brevet: **03.02.1993**
(21) Numéro de dépôt: 89403104.6
(22) Date de dépôt: 10.11.1989
(51) Int. Cl.: E03C 1/04, F16K 27/04

(54) **Dispositif de sécurité pour assembler les deux parties d'un corps de robinet**
Sicherheitsvorrichtung für die Montage zweier Teile eines Ventilkörpers
Security device for assembling both parts of a tap body

(30) Priorité: 23.12.1988 FR 8817065
(43) Date de publication de la demande: 27.06.1990
(73) Titulaire: LES ROBINETS PRESTO Société anonyme dite:, 92120 Montrouge (FR)
(72) Inventeur: Dutheil, Daniel, F-17 132 Mescheres (FR)
(74) Mandataire: Vander-Heym, Serge

(56) Documents cités:
- EP-A- 0 063 627
- EP-A- 0 167 276
- DE-A- 2 161 762
- GB-A- 2 194 837

## Description

La présente invention est relative à un dispositif de sécurité pour assembler les deux parties d'un corps de robinet.

On sait que la plupart des robinets présentent un corps réalisé en deux parties assemblées dont l'une est fixée au support tandis que la seconde comporte le bec verseur. L'assemblage des deux parties est réalisé à l'aide d'un écrou à épaulement.

Cet écrou est très facile d'accès et peut être facilement dévissé par une personne mal intentionnée.

On connaît aussi des robinets dont le corps en deux parties est assemblé par des vis radiales. De tels robinets sont décrits dans le document DE-A-2161762 dans le document GB-A-2194837 ou dans le document EP-A-0167276.

Dans ces documents les vis d'assemblages sont visibles et peuvent être facilement démontées par une personne mal intentionnée.

Le robinet de l'invention, comporte un corps en deux parties, s'emboitant axialement, assemblée par des vis radiales et il est caractérisé en ce que les vis radiales sont dissimulées sous une bague, immobilisée axialement sur la partie extérieure du corps, libre en rotation et présentant un trou d'accès aux dites vis.

De cette façon, pour démonter le robinet, il faut faire pivoter la bague précitée pour amener, par rotations successives le trou en regard des têtes de vis.

Cette opération est relativement facile pour le technicien qui connaît bien le dispositif mais elle est longue pour une personne qui ne connaît pas la structure du robinet.

A cela s'ajoute le fait que la bague occupe sensiblement la position de l'écrou d'assemblage usuel mais, la rotation de la bague,contrairement à celle de l'écrou, n'a aucun effet sur le robinet et cette vaine manoeuvre est très dissuasive.

L'invention sera mieux comprise par la description qui va suivre, faite en se référant aux dessins annexés à titre d'exemple indicatif seulement, sur lesquels :
La figure 1 est une vue en coupe de la partie inférieure d'un robinet comportant le dispositif de l'invention ;
La figure 2 est une vue en coupe effectuée selon la ligne II-II de la figure 1;
La figure 3 est une vue en coupe effectuée selon la ligne III-III de la figure 2;
La figure 4 est une vue en coupe effectuée selon la ligne IV-IV de la figure 2;
La figure 5 est une vue partielle en perspective montrant un détail de réalisation.

En se reportant aux dessins, on voit que le corps du robinet est réalisé en deux parties 1 et 2 celle 1 formant embase et étant fixée sur un support (non représenté) tandis que celle 2, qui s'engage axialement sur celle 1,comporte le bec verseur usuel non représenté.

Dans l'exemple choisi, on a représenté un robinet mitigeur et c'est la raison pour laquelle on voit sur les dessins deux arrivées d'eau 3 et 4 mais le dispositif de l'invention peut être utilisé sur un robinet usuel comportant une seule arrivée d'eau.

La partie 2 est maintenue sur celle 1 par une pluralité de vis 5 radiales, dissimulées sous une bague 6.

La bague 6 est maintenue axialement par des épaulements 7 et 8 prévus respectivement sur la partie 1 et sur celle 2.

La bague 6 peut pivoter librement autour du corps du robinet et elle présente un trou 9 susceptible,par la rotation de ladite bague, d'être amené en coïncidence avec chacune des têtes de vis 5.

Pour augmenter la difficulté et, à l'inverse de ce qui a été représenté sur les dessins, les vis 5 peuvent être irrégulièrement réparties.

L'efficacité du dispositif est amplifiée lorsque celui-ci est utilisé sur un robinet mélangeur, comme cela va ressortir de ce qui va suivre.

Le robinet montré sur les dessins est un robinet mélangeur du genre de ceux dont les orifices 10 d'entrée de l'eau débouchent sous une glace 11 susceptible, par sa rotation, de réduire la section desdits orifices, voire d'obturer l'un de ceux-ci.

En l'état actuel de la technique, le corps du robinet présente une lumière hors de laquelle s'étend une manette dont le pivotement dans un plan perpendiculaire à l'axe du robinet,détermine la rotation de la glace 11.

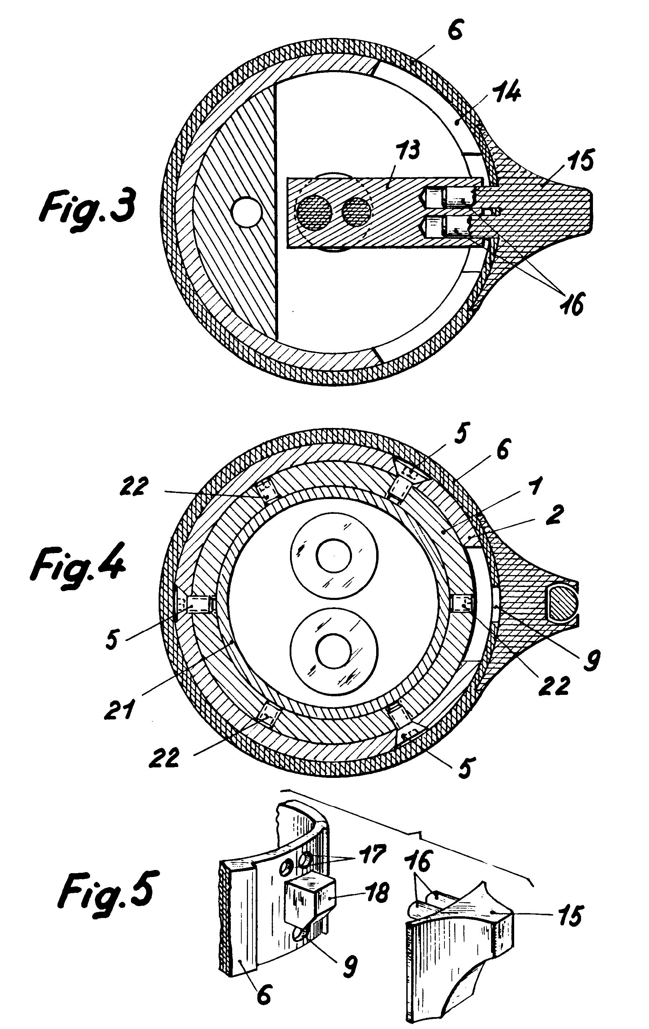

Selon l'invention, l'arbre 12 d'entraînement de la glace 11 est lié en rotation à un levier 13 qui s'étend dans une lumière 14 de la partie 2(figure 3) et est relié à un poussoir 15 fixé sur la bague 6, en un point tel que le trou 9 soit dissimulé sous ledit poussoir.

Selon un mode de réalisation, le poussoir 15 présente deux doigts 16 traversant la bague 6 par des trous 17 de cette dernière (figure 5) et s'engageant dans l'extrémité du levier 13.

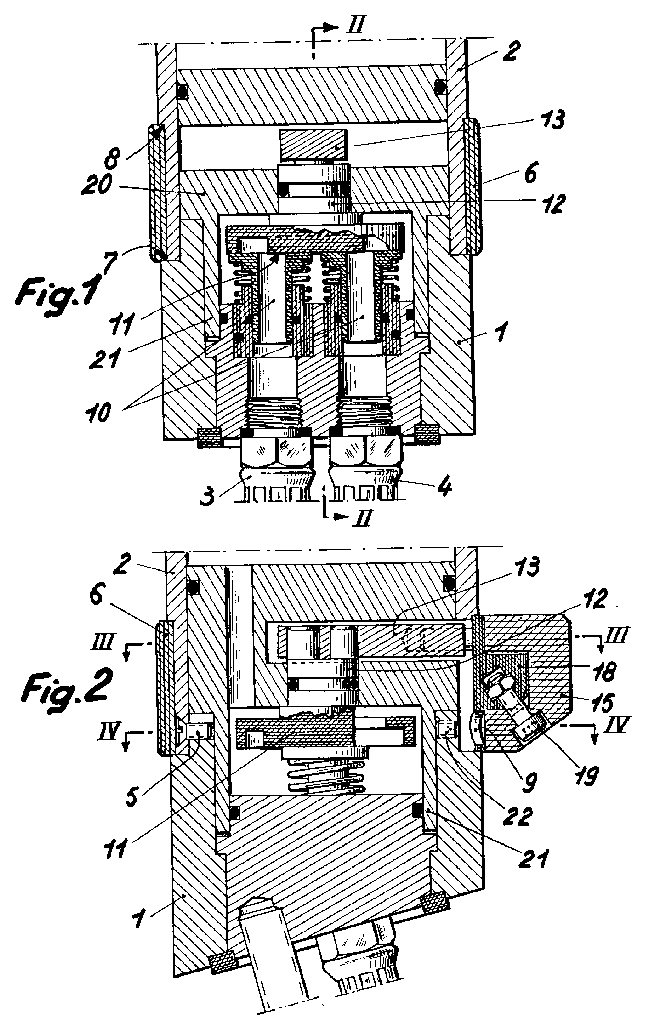

Le poussoir 15 s'emboîte sur un bossage 18 de la périphérie de la bague 6 et est maintenu sur ce dernier par une vis 19. De préférence et comme montré sur la figure 2,l'axe de la vis 19 est disposé obliquement par rapport à celui du robinet et sa tête est dirigée vers la partie 1.

De cette façon, la tête de la vis 19 est difficilement décelable et sa manoeuvre ne peut être effectuée qu'à l'aide d'une clé coudée, ce qui constitue un obstacle supplémentaire au démontage du robinet par une personne mal intentionnée et non avertie.

Bien entendu, la présente invention ne se limite pas au mode de réalisation décrit et représenté mais s'étend, au contraire, à toutes variantes de formes et dimensions.

C'est ainsi, encore, que l'arbre 12 d'entraînement de la glace est porté par une pièce 20 amovible, présentant une jupe 21 engagée dans la pièce 1 et maintenue sur celle-ci par des vis 22 disposées de façon à être accessibles par le trou 9 de la bague 6.

Enfin, dans le cas d'un robinet usuel, non mitigeur, il peut être souhaitable d'empêcher la bague 6 de tourner. Dans ce cas, la bague 6 est immobilisée en rotation par une vis se vissant dans l'une des deux parties du robinet, la tête de cette vis étant dissimulée sous la plaque du constructeur, fixée sur ladite bague. Naturellement, dans ce cas,le trou 9 est également dissimulé sous la plaque du constructeur qui, de préférence, est clipsée dans un logement prévu sur ladite bague (ce mode de réalisation n'est pas représenté).

## Revendications

1. Robinet comportant un corps en deux parties, s'emboîtant axialement, assemblées à l'aide de vis radiales, caractérisé en ce que les vis (5) radiales sont dissimulées sous une bague (6), immobilisée axialement sur la partie extérieure du corps, libre en rotation et présentant un trou (9) d'accès auxdites vis (5).

2. Robinet mélangeur selon la revendication 1, dont la rotation de la glace (11) effectuant le mélange est commandée par un poussoir (15), caractérisé en ce que le poussoir est fixé sur la bague (6) et obture le trou (9) de cette dernière.

3. Robinet mélangeur selon la revendication 2, caractérisé en ce que la bague (6) présente un bossage (18) sur lequel s'emboîte le poussoir (15) qui est fixé sur ce dernier par l'entremise d'une vis (19) dont l'axe est disposé en oblique par rapport à celui du corps du robinet, la tête de ladite vis étant dirigée vers le support usuel.

4. Robinet mélangeur selon l'une quelconque des revendications 2 et 3, caractérisé en ce que le poussoir (15) présente, au moins, un doigt (16) traversant la bague (6) et s'engageant dans l'extrémité d'un levier (13) dont la rotation détermine celle de la glace (11).

5. Robinet mélangeur selon l'une quelconque des revendications 2 à 4, caractérisé en ce que l'arbre (12) d'entraînement de la glace (11) est porté par une pièce (20) amovible, présentant une jupe (21) engagée dans la partie (1) et maintenue sur celle-ci par des vis (22) radiales, accessibles par le trou (9) de la bague (6).

## Patentansprüche

1. Hahn, bestehend aus zwei in Achsrichtung ineinandergesteckten und durch radiale Schrauben zusammengehaltenen Teilen, dadurch gekennzeichnet, daß die radialen Schrauben (5) von einem in Achsrichtung auf der Außenseite des Körpers befestigten und frei drehbaren Ring (6) verdeckt sind, der eine Öffnung (9) aufweist, durch die die o.a. Schrauben (5) zugänglich sind.

2. Mischhahn nach Patentanspruch 1, bei dem die Drehung der die Mischung bewirkenden Scheibe (11) durch einen Schieber (15) erfolgt, dadurch gekennzeichnet, daß der Schieber auf dem Ring (6) befestigt ist und die darin vorgesehene Öffnung (9) verdeckt.

3. Mischhahn nach Patentanspruch 2, dadurch gekennzeichnet, daß der Ring (6) einen Vorsprung (18) besitzt, auf den der Schieber (15) aufgesteckt und mit einer Schraube (19) befestigt wird, deren Achse schräg zum Hahnkörper verläuft und deren Kopf zu der üblichen Halterung hin ausgerichtet ist.

4. Mischhahn nach einem beliebigen der Patentansprüche 2 und 3, dadurch gekennzeichnet, daß der Schieber (15) mindestens einen den Ring (6) durchquerenden und in das Ende eines Hebels (13) reichenden Finger (16) besitzt, wobei eine Drehung des Hebels eine Drehung der'Scheibe (11) bewirkt.

5. Mischhahn nach einem beliebigen der Patentansprüche 2 bis 4, dadurch gekennzeichnet, daß die Welle (12) zum Antrieb der Scheibe (11) von einem abnehmbaren Teil (20) gehalten wird, das eine Schürze (21) aufweist, welche in dem Teil (1) sitzt und dort von radialen Schrauben (22) festgehalten wird, die durch die Öffnung (9) im Ring (6) zugänglich sind.

## Claims

1. Tap comprising a body made up of two prtions axially fitted together and assembled with the aid of radial screws, wherein the radial screws (5) are hidden under a ring 6) axially immobilized on the outer portion of the body rotating freely and having a hole (9) for access to said screws (5).

2. Mixing tap according to claim 1 and whose rotation of the mirror glass carrying out the mixture is controlled by a push button (15), wherein the push button is secured to the ring (6) and seals off the hole (9) of the latter.

3. Mixing tap according to claim 2, wherein the ring (6) has a boss (18) nesting the push button (15) secured to the latter via the intervention of a screw (19) whose axis is disposed obliquely with respect to that of the body of the tap, the head of said screw being directed towards the usual support.

4. Mixing tap according to claim 2 or 3, wherein the push button (15) has at least one finger (16) traversing the ring (6) and being engaged in the extremity of a lever (13) whose rotation determines that of the mirror glass (11).

5. Mixing tap according to any one of claims 2 to 4, wherein the drive shaft of the mirror glass (11) is borne by a movable part (20) having a skirt (21) engaged inside the portion (1) and kept in position on the latter by means of radial screws (22) accessible through the hole of the ring (6).
